# EUROPÄISCHE PATENTSCHRIFT

(11) **EP 1 012 598 B1**
(45) Veröffentlichungstag und Bekanntmachung des Hinweises auf die Patenterteilung: **02.01.2008**
(21) Anmeldenummer: 97941933.0
(22) Anmeldetag: 12.08.1997
(51) Int. Cl.: G01N 31/10

(54) **VERFAHREN UND VORRICHTUNG ZUM UNTERSUCHEN VON CHEMISCHEN REAKTIONEN IN PARALLEL GESCHALTETEN, MINIATURISIERTEN REAKTOREN**
PROCESS AND FACILITY FOR EXAMINING CHEMICAL REACTIONS IN MINIATURIZED REACTORS ARRANGED PARALLEL TO EACH OTHER
PROCEDE ET INSTALLATION POUR L'EXAMEN DE REACTIONS CHIMIQUES DANS DES REACTEURS MINIATURISES BRANCHES EN PARALLELE

(30) Priorität: 15.08.1996 DE 19632779
(43) Veröffentlichungstag der Anmeldung: 28.06.2000
(73) Patentinhaber: Evonik Degussa GmbH, 40474 Düsseldorf (DE)
(72) Erfinder: WINDHAB, Norbert, D-65795 Hattersheim (DE); MICULKA, Christian, D-65929 Frankfurt am Main (DE); HOPPE, Hans-Ulrich, D-65929 Frankfurt am Main (DE)
(86) Internationale Anmeldenummer: PCT/EP1997/004369
(87) Internationale Veröffentlichungsnummer: WO 1998/007026

(56) Entgegenhaltungen:
- US-A- 3 431 077
- US-A- 4 099 923
- US-A- 5 266 270

## Beschreibung

Die Erfindung betrifft ein Verfahren zur Untersuchung von chemischen Reaktionen in Gegenwart von potentiell katalytischen Substanzen, bei dem man die Reaktionen parallel in Reaktoren durchführt. Die Erfindung betrifft weiterhin eine Vorrichtung, insbesondere zur Durchführung dieses Verfahrens, wobei die Vorrichtung mehrere, parallel geschaltete Reaktoren aufweist, die mit Zu- und Ableitungen versehen sind.

Verfahren und Vorrichtungen der genannten Art sind bekannt und werden unter anderem bei der Suche nach Katalysatoren zur heterogenen oder homogenen Katalyse technischer, chemischer Prozesse eingesetzt (US-A-499 923, US-A-3 431 077).

In jüngster Zeit ermöglichen es jedoch neue Techniken, Substanzen in hoher Zahl herzustellen, die potentielle Katalysatoren für eine Vielzahl von chemischen Prozessen sein könnten (P. G. Schultz et al., Science 1995, 1738). Die Untersuchung dieser Vielzahl von potentiellen Katalysatoren ist mit den herkömmlichen seriellen Screening-Verfahren kaum mehr möglich, da diese Screening-Verfahren bezüglich Durchsatz und analytischer Auflösung sowie in der Reproduzierbarkeit limitiert sind. Oft werden für reines Aktivitätsscreening völlig unzureichend integrale Effekte wie Erwärmung des Katalysators etc. ohne direkte Produktgemisch- bzw. Effektivitätsanalyse herangezogen. Außerdem stellen die Optimierung der Bedingungen zur Katalysatoraktivierung und Prozessführung besondere Anforderungen an quantitative, analytische Verfahren und an die Reproduzierbarkeit der Reaktionsbedingungen.

Der Erfindung lag daher die Aufgabe zugrunde, ein kostengünstiges Verfahren oder eine kostengünstige Vorrichtung zu entwickeln, womit man eine Vielzahl von chemischen Reaktionen in kurzer Zeit untersuchen kann und dabei reproduzierbare, qualitative und quantitative Daten bezüglich der Zusammensetzung der unterschiedlichen Reaktionsgemische und Reaktionsprodukte gewinnen kann.

Gelöst wird diese Aufgabe durch ein Verfahren der eingangs genannten Art, das dadurch gekennzeichnet ist, daß man die Reaktionen in miniaturisierten Reaktoren durchführt und das Reaktionsgemisch oder die Reaktionsprodukte während der Reaktionszeit nach Art und Menge analysiert.

Die Aufgabe wird außerdem durch eine Vorrichtung der genannten Art gelöst, die dadurch gekennzeichnet ist, daß die Reaktoren miniaturisiert sind, bei einem Volumen aus dem Bereich von 0,001 cm³ bis 1 cm³.

Gegenstand der Erfindung ist somit ein Verfahren zur Untersuchung von chemischen Reaktionen in Gegenwart von potentiell katalytischen Substanzen, bei dem man die Reaktionen parallel in Reaktoren durchführt, dadurch gekennzeichnet, daß man die Reaktionen in miniaturisierten Reaktoren durchführt und das Reaktionsgemisch während der Reaktionszeit nach Art und Menge analysiert.

Gegenstand der Erfindung ist außerdem eine Vorrichtung, insbesondere zur Durchführung dieses Verfahrens, wobei die Vorrichtung mehrere, parallel geschaltete Reaktoren aufweist, die mit Zu- und Ableitungen versehen sind, dadurch gekennzeichnet, daß die Reaktoren miniaturisiert sind, bei einem Volumen aus dem Bereich von 0,001 cm³ bis 1 cm³.

Besondere Ausführungsformen bzw. Ausgestaltungen der Erfindung ergeben sich aus den jeweiligen Unteransprüchen. Es können auch einzelne oder mehrere der in den Ansprüchen genannten Einzelmerkmale jeweils für sich erfindungsgemäße Lösungen darstellen, und es sind auch die Merkmale innerhalb der Anspruchskategorien beliebig kombinierbar.

Eine besondere Ausführungsform des erfindungsgemäßen Verfahrens ist dadurch gekennzeichnet, daß man die Reaktionsedukte laufend den Reaktoren zuführt und die Reaktionsprodukte laufend aus den Reaktoren abführt. Die Batch-Fahrweise ist aber ebenfalls möglich.
Eine weitere besondere Ausführungsform ist dadurch gekennzeichnet, daß man Edukte verwendet, die mindestens teilweise mit Isotopen markiert sind, bevorzugt mit Deuterium (²H) oder schweren Sauerstoff (¹⁸O) oder schweren Kohlenstoff (¹³C) oder Mischungen davon. Diese erzeugen charakteristische Spektrahlverschiebungen in Rotations-Schwingungsspektren, was neben der Reaktionswegemarkierung durch Eduktgemischvarianten zu neuen, interessanten Reaktionen bzw. Reaktionsprodukten führen kann und kleinere Nebenproduktanteile systematisch kontrastiert.
Es können auch einzelnen oder zu Gruppen zusammengefaßten Reaktoren unterschiedliche Eduktgemische zugeführt werden, um so mit den Methoden der kombinatorischen Chemie eventuell vorhandene Synergien zu erkennen oder zu entdecken.
Die Edukt-, Reaktions- bzw. Produktgemische können mittels spektroskopischer Analyse, bevorzugt mittels Infrarotspektroskopie (IR), besonders bevorzugt mittels Fourier IR-Spektroskopie zu beliebigen Zeitpunkten des Reaktionsverlaufs nach Art und Menge der enthaltenen Substanzen analysiert werden. Andere spektroskopische Methoden wie Laser- oder UV-Spektroskopie sind zur Untersuchung ebenfalls geeignet. Das Verfahren kann bei unterschiedlichen Temperaturen und Drücken durchgeführt werden, bei Temperaturen aus dem Bereich von -50 °C bis einschließlich 600°C, bevorzugt von Raumtemperatur bis 500 °C, oder bei unterschiedlichen Drücken, bei Absolutdrücken von 10⁻³ bis 10³ bar, bevorzugt von 10⁻² bis 200 bar.
Die gewonnenen Daten können dann einer umfassenden Parameter- und Datenanalyse zugeführt werden.
Die Erfindung ist weiter dadurch gekennzeichnet, daß die Reaktionen in Gegenwart eines heterogenen oder homogenenKatalysators durchgeführt werden können und daß das Screening der katalytischen Aktivität (d.h. Produktnachweis) und Selektivität (Hauptproduktverteilung) von Katalysatormengen kleiner als 10 mg, bevorzugt kleiner als 1 mg, in einem Reaktor möglich ist.
In einer besonderen Ausgestaltungsform der erfindungsgemäßen Vorrichtung können in einem Block mehrere, voneinander getrennte, miniaturisierte Reaktoren angeordnet sein. Das Volumen dieser Reaktoren kann im Bereich von 0,001 cm³ bis 1 cm³ , bevorzugt von 0,01 cm³ bis 0,5 cm³, besonders bevorzugt von 0,05 cm³ bis 0,2 cm³ sein. In einer weiteren bevorzugten Ausgestaltungsform der erfindungsgemäßen Vorrichtung sind die Reaktoren als quadratisches oder rechteckiges Muster in einem Metallblock angeordnet, der quader- oder würfelförmig sein kann. Der Metallblock kann mit Heizblock- oder Kühlelementen versehen sein und kann in der Nähe eines jeden Reaktors mit einem Temperaturfühler ausgestattet sein. Dies ermöglicht eine kontrollierte und reproduzierbare Temperaturführung. Beispielsweise kann dadurch ein definierter Temperaturgradient über den Metallblock eingestellt werden. Die Reaktoren sind vorteilhafterweise in einer Ebene, die parallel zu einer Oberfläche des Quaders liegt, angeordnet. Die Zu- und Ableitungen der einzelnen Reaktoren liegen vorteilhafterweise zumindest teilweise senkrecht zu dieser Ebene. Sie können in dem Metallblock als durchgehende Bohrungen ausgeführt sein. Die Reaktoren können als Bohrungen ausgeführt sein. Die Zahl der Reaktoren in einem Block kann größer sein als 20, bevorzugt größer als 40, besonders bevorzugt größer als 100, ganz besonders bevorzugt größer als 200. Mit diesen Reaktoren können unter definierten Reaktionsbedingungen kleine Menge potentieller Katalysatoren (im folgenden auch Proben genannt) parallel, d.h. gleichzeitig mit Edukt bzw. Eduktgemischen in flüssiger und/oder in gasförmiger Form diskontinuierlich oder kontinuierlich in Kontakt und zur Reaktion gebracht werden. Eine Automatisierung der erfindungsgemäßen Vorrichtung ist möglich, insbesondere kann das Beschicken der Reaktoren mit Katalysatoren automatisch, bevorzugt durch einen Laborroboter oder einen Pipettierer erfolgen.

In einer weiteren besonderen Ausgestaltungsform sind die miniaturisierten Reaktoren in dem Metallblock als 4 mm-Bohrungen ausgeführt und so angeordnet, daß sie durch 2,5-mm-Kapillarbohrungen mit unterschiedlichen Edukt- und Inertgasen beströmt werden können. Die Gase gelangen anschließend in einen Abstandshalter, vorzugsweise eine Distanzplatte, die auf den Metallblock aufgesetzt ist und in der sich die Bohrungen des Metallblocks fortsetzen. Die Anordnung aus Metallblock und Abstandshalter ist mit einer gängigen Küvettenbohrung versehen, in der die Gase spektroskopisch analysiert werden können. Dazu ist die Bohrung an beiden Enden mit einem transparenten Fenster verschlossen. Will man mit Infrarotspektroskopie analysieren, verwendet man bevorzugt Fenster aus 1-1-1-Silicium, NaCl, KBr, Ge, ZnSe oder KSR5. Zur Analyse wird ein kollimierter Analysestrahl, bei IR-Spektroskopie ein Infrarotstrahl, bevorzugt spiegelfrei aus einem Interferometer ausgekoppelt und durch Trockengas-gespülten Raum durch die Küvettenbohrung auf einen dahinter liegenden Detektor gelenkt. Die Küvettenbohrung kann beispielsweise 5 mm dick sein. Durch die Wahl eines geeigneten dicken Abstandhalters kann die Länge der Küvettenbohrung zwischen wenigen cm (1-10) und mehreren 10 cm (10-50) gewählt werden, je nach Reaktionsbedingungen und Reaktionstyp. Zur Aufnahme der Spektren kann der Analysestrahl mittels einer Ablenkvorrichtung nacheinander durch alle Küvettenbohrungen gelenkt werden. Es können aber auch mehrere Strahlen bzw. mehrere Analysatoren verwendet werden, so daß eine gleichzeitige Aufnahme von Spektren mit mehreren Reaktoren möglich ist. Es kann aber ebenso der Block mit den Reaktoren mittels Bewegungseinrichtungen, beispielsweise Schrittmotoren, so bewegt werden, daß alle Küvettenbohrungen nacheinander in den Strahlengang des Spektrometers gebracht werden. Als Werkstoffe für Block und Abstandshalter eignen sich vorzugsweise die gängigen, dem Fachmann geläufigen korrosionsbeständigen metallischen Werkstoffe, besonders Aluminium oder Stahl, vorzugsweise rost- und/oder säure- und/oder hochtemperaturbeständig.

Eine weitere Ausgestaltung der erfindungsgemäßen Vorrichtung, die sich besonders für die homogene Katalyse eignet, ist dadurch gekennzeichnet, daß bei mindestens einem Reaktor mit einem Volumen, das bevorzugt kleiner als 200 *µ*l ist, ein ATR-Kristall (Attenuated Total Reflection Spectroscopy, bevorzugt konisch spitz, bevorzugt aus ZnSe oder aus KSR5 oder aus Diamant) den spektroskopischen Kontakt zum Reaktionsgemisch bei unterschiedlichen Lösungsmitteln und Reaktionsbedingungen und Drücken bis 200 bar ermöglicht. In diesem Fall wird der Analysestrahl auf den ATR-Kristall fokussiert.

Die Vorteile des erfindungsgemäßen Verfahrens und der erfindungsgemäßen Vorrichtung liegen im wesentlichen darin, daß eine Vielzahl von Reaktionen unter praktisch identischen Bedingungen und mit vergleichsweise geringen Substanz- und Probenmengen schnell, kostengünstig und reproduzierbar durchgeführt und dabei gleichzeitig spektroskopisch untersucht werden kann. Sie bietet damit die Möglichkeit, die im Zusammenhang mit der kombinatorischen Chemie diskutierten Möglichkeiten (K. Burgess et al., Ang. Chem. 1996, 108, 2, 192, durch Bezugnahme mit in die Anmeldung integriert) für ein industrielles Katalysatorscreening einzusetzen. Durch die Wahl identischer Proben und unterschiedlicher sonstiger Reaktionsbedingungen wie Temperatur, Druck, Eduktzusammensetzung kann eine parallele Reaktionsoptimierung durchgeführt werden.
Zur Analyse der gewonnenen Daten wird vorteilhafterweise eine Datenmatrix dergestalt aufgestellt, daß alle wählbaren und dokumentierbaren Reaktionsbedingungen (Edukt-Partialdrücke, Eduktzusammensetzung, Temperatur, Durchfluß bzw. Durchflußrate, Gesamtdruck, Probenzusammensetzung, Probengitterparameter und alle Stützstellen der Spektren) nach Reaktionsbedingungen, d.h. je Reaktor, als Spalten der Matrix dargestellt werden. Diese Matrix kann einer Faktorenanalyse (E.R. Malinowski et. al., Factor Analysis in Chemistry, Wiley, New York, 1980, durch Bezugnahme mit in die Anmeldung integriert) unterzogen werden, indem man die Covarianzmatrix, die Eigenwerte, die abstrakten Eigenvektoren, die Loadings sowie die Koeffizienten der mehrdimensionalen Regression berechnet und bevorzugt als Dateien ausgibt. Es kann auch eine (Vor-)Normalisierung der Daten durch den Mittelwert "0" und Standardabweichungen "1" gewählt werden, wodurch Grundlinien- oder Absolutbetrageffekte vermieden werden können. Dies erlaubt die Vorhersage verschiedener Größen aus Eichdatensätzen (wie z.B. quantitative CO₂-Anteile bei verschiedenen Temperaturen), die Bestimmung der Abhängigkeit von Parametern in Spektralbereichen zur Optimierung der Analytik, die Generierung unterschiedlicher Distanzmatrizen aus den Ausgangsdaten (beispielsweise die Ähnlichkeit von Katalysatoren bezüglich der ausgewählten Größen und Eigenschaften) und das direkte Rückkoppeln der Katalysatorzusammensetzung auf einen Syntheselaborroboter, der einen Satz neuer Katalysatorproben mischt, und durch Sintern bzw. Kalzinieren auf einer Roboterstraße "selbständig" synthetisiert.

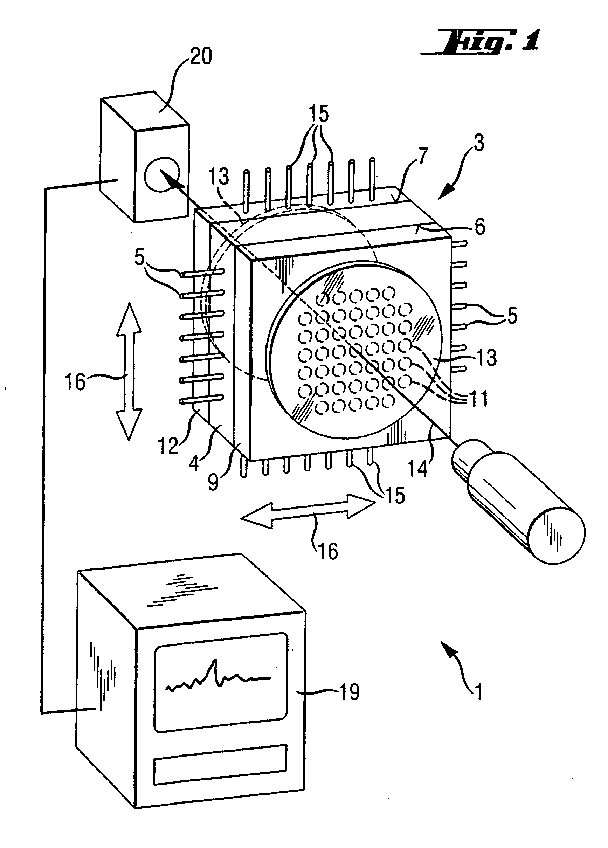

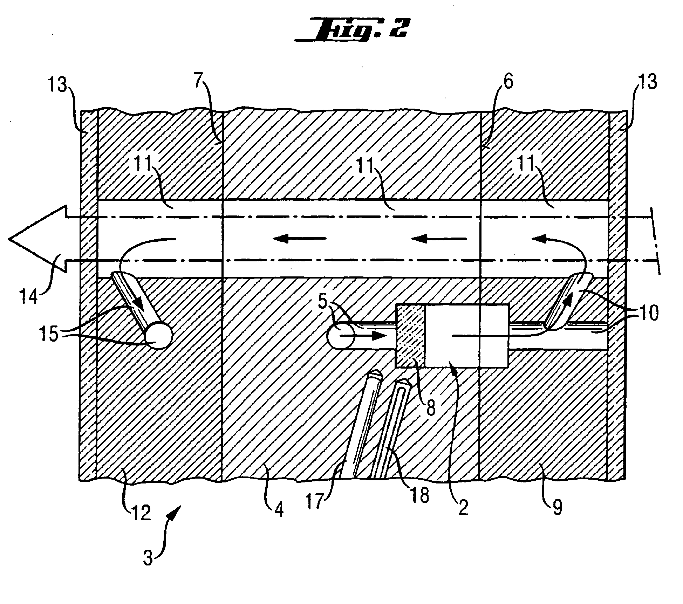

Im folgenden wird eine Ausführungsform des erfindungsgemäßen Verfahrens und eine Ausgestaltung der erfindungsgemäßen Vorrichtung anhand der Figuren 1 bis 2 näher erläutert, ohne daß dadurch beabsichtigt ist, die Erfindung in irgendeiner Weise zu beschränken.

Es zeigt
- Fig. 1: eine schematische Darstellung der erfindungsgemäßen Vorrichtung 1 im Strahlengang eines spektroskopischen Analysators;
- Fig. 2: einen einzelnen Reaktor 2 aus der erfindungsgemäßen Vorrichtung 1 in seitlicher Schnittansicht.

Eine Vorrichtung 1 zur Untersuchung von chemischen Reaktionen besteht im wesentlichen aus einer blockförmigen Anordnung 3 von miniaturisierten Reaktoren 2. Die blockförmige Anordnung 3 ist in der Weise ausgeführt, daß die Reaktoren 2 in einem quaderförmigen Metallblock 4, der eine Vorderseite 6 und eine Rückseite 7 aufweist, in der Form von Bohrungen eingearbeitet sind. Die Reaktoren 2 sind in die Vorderseite 6 des quaderförmigen Metallblocks 4 eingesenkt und in einem rechteckigem Muster angeordnet. Sie sind zum Zuführen der Edukte mit Bohrungen 5 verbunden. In die Reaktoren 2 sind Katalysatoren 8 eingebracht. Auf die Vorderseite 6 ist als Abstandshalter eine Distanzplatte 9 aufgebracht, in der sich die Reaktoren 2 als Bohrungen fortsetzen. Von diesen führen weitere Bohrungen 10, die der Ableitung der Reaktionsprodukte dienen, zu einer Küvettenbohrung 11. Auf der Rückseite 7 ist als weiterer Abstandshalter eine Distanzplatte 12 angeordnet. Die Küvettenbohrung 11 setzt sich durch den Metallblock 4 hindurch bis durch die Distanzplatte 12 hindurch fort. Sie ist an den freien Oberflächen der Distanzplatten mit transparenten Fenstern 13 verschlossen und dient der Ableitung der Reaktionsprodukte und gleichzeitig als Raum für deren spektroskopische Analyse mittels eines IR Strahls 14. Die Reaktionsprodukte werden, vom Reaktor 2 kommend, entsprechend den eingezeichneten Pfeilen durch die Bohrungen 10,11 geleitet. Vom Ende der Küvettenbohrung 11 in der Distanzplatte 12 werden sie über Bohrungen 15 abgeleitet. In der Nähe der Reaktoren 2 sind Heizelemente 17 und Thermoelemente 18 in den Metallblock 4 eingebracht. Die blockförmige Anordnung 3 ist durch Schrittmotoren 16 in beide Raumrichtungen senkrecht zum IR-Strahl 14 bewegbar. Dadurch kann jede zu einem der Reaktoren 2 gehörige Küvettenbohrung 11 in den IR-Strahl bewegt werden. Die Analyse des IR-Strahls erfolgt durch Aufnahme des Interferogramms mittels Interferometer 20 und Detektor 19, die nahe den transparenten Fenstern 13 angeordnet sind.

lm folgenden wird ein Versuchsbeispiel mit einem bekannten Katalysator beschrieben.

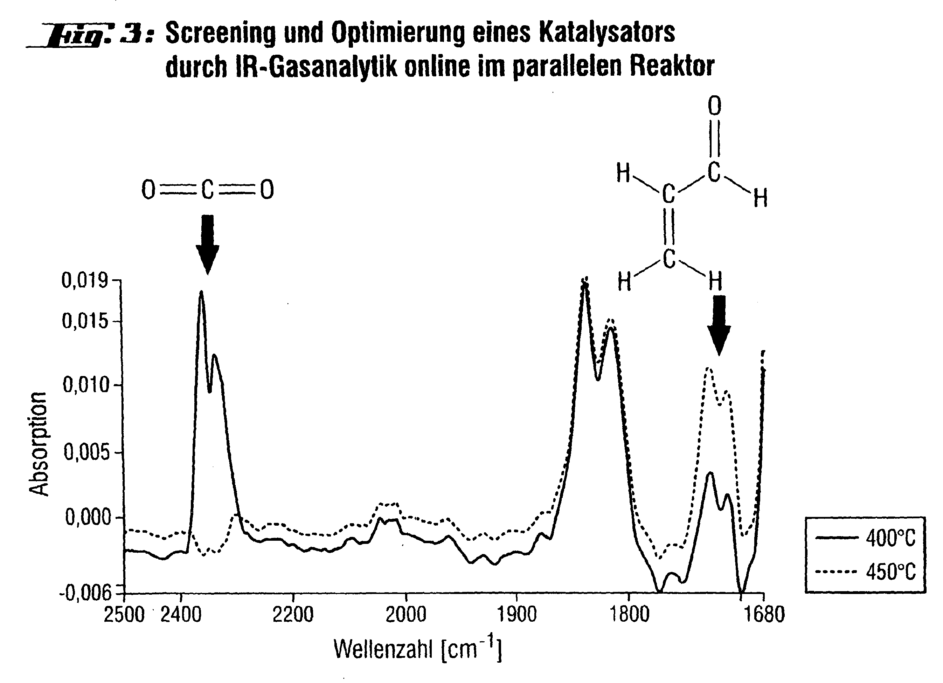

In der erfindungsgemäßen Vorrichtung wurden in den Reaktoren des Reaktorblockes unterschiedliche Feststoffe mit einem Gemisch aus 30,2 Vol.-% Propylen 2.5, 15,2 Vol.-% Sauerstoff 4.5, Rest Stickstoff 5.0 beströmt. Einer der Rreaktoren enthielt eine kleine Menge (5 mg) eines bekannten, industriellen Katalysators für die Oxidation von Propylen zu Acrolein. Vollautomatisch wurden die IR-Spektren aller Reaktionsgase bei unterschiedlichen Temperaturen aufgenommen. Fig.3 zeigt das Spektrum des Reaktionsgases des Reaktors, der den bekannten Katalysator enthielt bei 400 und 450 °C: Bei 400 °C kann bereits das Produkt (Acrolein aus Sauerstoff und Propylen) nachgewiesen werden. Es entstand allerdings noch viel Kohlendioxid. Bei 450 °C wurde kein Kohlendioxid mehr festgestellt, die Ausbeute an Produkt hatte zugenommen.(Die leichte negative Bande entstand durch Referenzierung und gibt die Grundliniengenauigkeit in diesem Experiment wieder.)

Somit wurde gezeigt, daß eine Katalysatoraktivität für eine spezielle Reaktion vollautomatisch nachgewießen und optimiert werden kann.

## Patentansprüche

1. Verfahren zur Untersuchung einer Vielzahl von chemischen Reaktionen in Gegenwart von potentiell katalytisch wirksamen Substanzen, bei dem man die Reaktionen parallel in Reaktoren durchführt, **dadurch gekennzeichnet, daß** man die Reaktionen in Reaktoren mit einem Volumen aus dem Bereich von 0,001 cm³ bis 1 cm³ durchführt und das Reaktionsgemisch während der Reaktionszeit spektroskopisch nach Art und Menge der Bestandteile analysiert.

2. Verfahren nach Anspruch 1, **dadurch gekennzeichnet, daß** man die Reaktionsedukte laufend den Reaktoren zuführt und die Produkte laufend aus den Reaktoren abführt.

3. Verfahren nach Anspruch 1 oder 2, **dadurch gekennzeichnet, daß** man die Reaktionen bei unterschiedlichen Temperaturen durchführt, vorzugsweise bei Temperaturen aus dem Bereich von Raumtemperatur bis einschließlich 600°C oder bei unterschiedlichen Drücken, vorzugsweise bei Absolutdrücken von 10⁻³ bis 10³ bar, besonders bevorzugt von 10⁻² bis 200 bar.

4. Verfahren nach einem oder mehreren der Ansprüche 1 bis 3, **dadurch gekennzeichnet, daß** die potentiellen Katalysatoren heterogene oder homogene Katalysatoren sind.

5. Verfahren nach Anspruch 4, **dadurch gekennzeichnet, daß** man pro Reaktor eine Katalysatormenge < 10 mg, bevorzugt <1mg verwendet.

6. Verfahren nach einem oder mehreren der Ansprüche 1 bis 5, **dadurch gekennzeichnet, daß** man das Reaktionsgemisch oder die Reaktionsprodukte mit IR-Spektroskopie nach Art und Menge der Bestandteile analysiert.

7. Verfahren nach einem oder mehreren der Ansprüche 1 bis 6, **dadurch gekennzeichnet, daß** man die Reaktionen in mehr als 20, bevorzugt mehr als 40, besonders bevorzugt mehr als 100 Reaktoren durchführt.

8. Verfahren nach einem oder mehreren der Ansprüche 1 bis 6, **dadurch gekennzeichnet, daß** man Reaktionen der homogenen oder heterogenen Katalyse mit flüssigen oder gasförmigen Edukten oder Produkten untersucht.

9. Verfahren nach Anspruch 6, **dadurch gekennzeichnet, daß** man die spektroskopische Analyse an allen Reaktoren gleichzeitig durchführt indem man eine entsprechende Zahl von Analysatoren einsetzt, oder daß man die spektroskopische Analyse an den Reaktoren nacheinander durchführt, in dem man einen Analysestrahl, mittels einer Ablenkvorrichtung nacheinander auf die einzelnen Reaktoren richtet oder indem man die Reaktoren mittels einer Bewegungseinrichtung nacheinander in den Analysestrahl bringt.

10. Verfahren nach einem oder mehreren der Ansprüche 1 bis 9, **dadurch gekennzeichnet, daß** man Edukte verwendet, die mindestens teilweise mit Isotopen markiert sind, bevorzugt mit Deuterium oder schweren Sauerstoff oder schweren Kohlenstoff.

11. Verfahren nach einem oder mehreren der Ansprüche 1 bis 10, **dadurch gekennzeichnet, daß** einzelnen oder zu Gruppen zusammengefaßten Reaktoren unterschiedliche Eduktgemische zugeführt werden.

12. Vorrichtung (1), insbesondere zur Durchführung des Verfahrens gemäß Anspruch 1, wobei die Vorrichtung (1) mehrere, parallel geschaltete Reaktoren (2) aufweist, die mit Zu- und Ableitungen (5, 10, 11, 15) versehen sind, **dadurch gekennzeichnet, daß** die Reaktoren (2) miniaturisiert sind, bei einem Volumen aus dem Bereich von 0,001 cm³ bis 1 cm³, und daß die Zuleitungen (5) oder die Ableitungen (10, 11) oder die Reaktoren (2) mindestens teilweise für Analysestrahlung transparent sind.

13. Vorrichtung nach Anspruch 12, **dadurch gekennzeichnet, daß** die Reaktoren in der Form eines Blocks angeordnet sind, vorzugsweise rechteckig oder quadratisch.

14. Vorrichtung (1) nach Anspruch 12 oder 13, **dadurch gekennzeichnet, daß** die Zuleitungen (5) oder die Ableitungen (10, 11, 15) oder die Reaktoren (2) mindestens teilweise für Infrarot-, Laser- oder UV-Licht transparent sind.

15. Vorrichtung (1) nach einem oder mehreren der Ansprüche 12 bis 14, **dadurch gekennzeichnet, daß** die Reaktoren (2) in einem quaderförmigen Metallblock (4) angeordnet sind, der mit Heizelementen (17) und/oder Temperaturmeßstellen (18) ausgerüstet ist.

16. Vorrichtung (1) nach einem oder mehreren der Ansprüche 12 bis 15, **dadurch gekennzeichnet, daß** die Vorrichtung (1) mit Bewegungseinrichtungen (16) versehen ist, vorzugsweise mit Schrittmotoren (16).

17. Vorrichtung (1) nach einem oder mehreren der Ansprüche 12 bis 16, **dadurch gekennzeichnet, daß** die Vorrichtung (1) mehr als 20, bevorzugt mehr als 40, besonders bevorzugt mehr als 100, ganz besonders bevorzugt mehr als 200 Reaktoren (2) aufweist.

18. Vorrichtung (1) nach einem oder mehreren der Ansprüche 12 bis 17, **dadurch gekennzeichnet, daß** mindestens ein Reaktor (2) mit einem ATR-Kristall ausgerüstet ist, der einen spektroskopischen Kontakt zum Reaktionsgemisch ermöglicht.

19. Vorrichtung (1) nach Anspruch 15, **dadurch gekennzeichnet, daß** die Reaktoren (2) in einer Ebene parallel zu einer Oberfläche des Metallblockes (4) angeordnet sind, daß die Zu- oder Ableitungen (5,10, 15) mindestens abschnittsweise senkrecht zu dieser Ebene gelegt sind, daß auf einer Oberfläche ein Abstandshalter (9, 12) angebracht ist, der Bohrungen (10) aufweist, durch die die Reaktoren (2) oder die Ableitun gen (10,) verlängerbar sind, daß der Metallblock (4) und die Abstandshalter (9) als Ableitungen Küvettenbohrungen (11) aufweisen, die mit den Ableitungen (10, 15) verbunden sind, und daß auf dem Abstandshalter für Analysenstrahlung transparente Fenster (13) angebracht sind, die die Küvettenbohrungen (11) gegen die Umgebung verschließen.

20. Vorrichtung nach einem oder mehreren der Ansprüche 12 bis 19, **dadurch gekennzeichnet, daß** die Reaktoren (5) Katalysatoren (8) enthalten, bevorzugt mit einem Gewicht kleiner als 10 mg pro Reaktor (2), besonders bevorzugt mit einem Gewicht kleiner als 1 mg pro Reaktor (2).

## Claims

1. Process for the study of a multiplicity of chemical reactions in the presence of potentially catalytically active substances in which the reactions are carried out in parallel in reactors, **characterized in that** the reactions are carried out in reactors having a volume from the range from 0.001 cm³ to 1 cm³ and the reaction mixture is analyzed spectroscopically with respect to nature and amount of the constituents during the reaction period.

2. Process according to Claim 1, **characterized in that** the reaction starting materials are fed continuously to the reactors and the products are discharged continuously from the reactors.

3. Process according to Claim 1 or 2, **characterized in that** the reactions are carried out at differing temperatures, preferably at temperatures of the range from room temperature up to and including 600°C or at differing pressures, preferably at absolute pressures from 10⁻³ to 10³ bar, particularly preferably from 10⁻² to 200 bar.

4. Process according to one or more of Claims 1 to 3, **characterized in that** the potential catalysts are heterogeneous or homogeneous catalysts.

5. Process according to Claim 4, **characterized in that**, per reactor, use is made of an amount of catalyst <10 mg, preferably < 1 mg.

6. Process according to one or more of Claims 1 to 5, **characterized in that** the reaction mixture or the reaction products are analyzed by IR spectroscopy with respect to nature and amount of the constituents.

7. Process according to one or more of Claims 1 to 6, **characterized in that** the reactions are carried out in more than 20 reactors, preferably more than 40, particularly preferably more than 100.

8. Process according to one or more of Claims 1 to 6, **characterized in that** reactions of homogeneous or heterogeneous catalysis involving liquid or gaseous starting materials or products are studied.

9. Process according to Claim 6, **characterized in that** the spectroscopic analysis is carried out on all reactors simultaneously by using an appropriate number of analyzers, or **in that** the spectroscopic analysis is carried out on the reactors one after the other by directing an analysis beam onto the individual reactors in succession by means of a deflection apparatus or by bringing the reactors into the analytical beam in succession by means of a motion device.

10. Process according to one or more of Claims 1 to 9, **characterized in that** use is made of starting materials, at least some of which are labeled by isotopes, preferably with deuterium or heavy oxygen or heavy carbon.

11. Process according to one or more of Claims 1 to 10, **characterized in that** individual reactors or reactors combined to form groups are fed with differing starting material mixtures.

12. Apparatus (1), in particular for carrying out the process according to Claim 1, with the apparatus (1) having a plurality of parallel-connected reactors (2), which are provided with feedlines and discharge lines (5,10,11,15), **characterized in that** the reactors (2) are miniaturized, at a volume from the range from 0.001 cm³ to 1 cm³, and **in that** the feedlines (5) or the discharge lines (10, 11) or the reactors (2) are at least in part transparent to analytical radiation.

13. Apparatus according to Claim 12, **characterized in that** the reactors are arranged in the form of a block, preferably rectangular or square.

14. Apparatus (1) according to Claim 12 or 13, **characterized in that** the feedlines (5) or the discharge lines (10, 11, 15) or the reactors (2) are at least in part transparent to infrared, laser or UV light.

15. Apparatus (1) according to one or more of Claims 12 to 14, **characterized in that** the reactors (2) are arranged in a parallelepipedal metal block (4) which is equipped with heating elements (17) and/or temperature measuring points (18).

16. Apparatus (1) according to one or more of Claims 12 to 15, **characterized in that** the apparatus (1) is provided with motion devices (16), preferably with stepper motors (16).

17. Apparatus (1) according to one or more of Claims 12 to 16, **characterized in that** the apparatus (1) has more than 20 reactors (2), preferably more than 40, particularly preferably more than 100, very particularly preferably more than 200.

18. Apparatus (1) according to one or more of Claims 12 to 17, **characterized in that** at least one reactor (2) is equipped with an ATR crystal which enables spectroscopic contact with the reaction mixture.

19. Apparatus (1) according to Claim 15, **characterized in that** the reactors (2) are arranged in a plane parallel to a surface of the metal block (4), **in that** the feedlines or discharge lines (5,10,15) are laid at least in sections perpendicular to this plane, **in that** a spacer (9,12) is mounted on a surface, which spacer has bore holes (10), through which the reactors (2) or the discharge lines (10) can be extended, **in that** the metal block (4) and the spacer (9) as discharge lines have cuvette bore holes (11), which are connected to the discharge lines (10,15), and **in that** on the spacer for analytical radiation, transparent windows (13) are mounted which seal off the cuvette bore holes (11) from the surroundings.

20. Apparatus according to one or more of Claims 12 to 19, **characterized in that** the reactors (5) comprise catalysts (8), preferably having a weight less than 10 mg per reactor (2), particularly preferably having a weight less than 1 mg per reactor (2).

## Revendications

1. Procédé en vue de l'étude d'une pluralité de réactions chimiques en présence de susbtances actives potentiellement du point de vue catalytique, lors duquel on effectue les réactions en parallèle dans des réacteurs, **caractérisé en ce que** l'on effectue les réactions dans des réacteurs ayant un volume entre 0,001 cm³ et 1 cm³ et **en ce que** l'on analyse le mélange réactionnel pendant la durée de réaction par voie spectroscopique pour ce qui est de la nature et de la quantité des constituants.

2. Procédé selon la revendication 1, **caractérisé en ce que** l'on alimente les réacteurs en produits de départ de réaction en mode continu et **en ce que** l'on évacue les produits en mode continu hors de réacteurs.

3. Procédé selon la revendication 1 ou 2, **caractérisé en ce que** l'on effectue les réactions à des températures différentes, de- préférence à des températures entre la température ambiante et 600 °C inclus ou à des pressions différentes, de préférence à des pressions absolues de 10⁻³ à 10³ bar, plus préférablement de 10⁻² à 200 bar.

4. Procédé selon l'une ou plusieurs des revendications 1 à 3, **caractérisé en ce que** les catalyseurs potentiels sont des catalyseurs hétérogènes ou homogènes.

5. Procédé selon la revendication 4, **caractérisé en ce que** l'on utilise par réacteur une quantité de catalyseur < 10 mg, de préférence < 1 mg.

6. Procédé selon l'une ou plusieurs des revendications 1 à 5, **caractérisé en ce que** l'on analyse, pour ce qui est de la nature et de la quantité des constituants, le mélange réactionnel ou les produits de réaction par spectroscopie IR.

7. Procédé selon l'une ou plusieurs des revendications 1 à 6, **caractérisé en ce que** l'on effectue les réactions dans plus de 20, de préférence plus de 40, plus préférablement, plus de 100 réacteurs.

8. Procédé selon l'une ou plusieurs des revendications 1 à 6, **caractérisé en ce que** l'on examine les réactions de la catalyse hétérogène ou homogène avec des produits de départ ou des produits de réaction liquides ou gazeux.

9. Procédé selon la revendication 6, **caractérisé en ce que** l'on effectue l'analyse spectroscopique simultanément dans tous les réacteurs en utilisant un nombre correspondant d'analyseurs ou **en ce que** l'on effectue l'analyse spectroscopique dans les réacteurs l'un après l'autre en dirigeant sur les réacteurs individuels un rayonnement d'analyse à l'aide d'un équipement de déviation ou en mettant les réacteurs l'un après l'autre dans le rayonnement d'analyse à l'aide d'un équipement de déplacement.

10. Procédé selon l'une ou plusieurs des revendications 1 à 9, **caractérisé en ce que** l'on utilise des produits de départ qui sont marqués au moins en partie à l'aide d'isotopes, de préférence à l'aide de deutérium ou d'oxygène lourd ou de carbone lourd.

11. Procédé selon l'une ou plusieurs des revendications 1 à 10, **caractérisé en ce que** l'on achemine, aux réacteurs individuels ou aux réacteurs rassemblés en groupes, des mélanges de produits de départ différents.

12. Dispositif (1), en particulier en vue de l'exécution du procédé selon la revendication 1, le dispositif (1) présentant plusieurs réacteurs (2) branchés en parallèle, qui sont pourvus de conduits d'apport et d'évacuation (5, 10, 11, 15), **caractérisé en ce que** les réacteurs (2) sont miniaturisés, pour un volume entre 0,001 cm³ et 1 cm³ et **en ce que** les conduits d'apport (5) ou les conduits d'évacuation (10, 11) ou les réacteurs (2) sont au moins partiellement transparents au rayonnement d'analyse.

13. Dispositif selon la revendication 12, **caractérisé en ce que** les réacteurs sont disposés sous la forme d'un bloc, de préférence sous la forme d'un bloc rectangulaire ou carré.

14. Dispositif (1) selon la revendication 12 ou 13, **caractérisé en ce que** les conduits d'apport (5) ou les conduits d'évacuation (10, 11, 15) ou les réacteurs (2) sont au moins partiellement transparents à la lumière infrarouge, à la lumière laser ou à la lumière UV.

15. Dispositif (1) selon l'une ou plusieurs des revendications 12 à 14, **caractérisé en ce que** les réacteurs (2) sont disposés dans un bloc métallique de forme carrée (4), qui est équipé d'éléments de chauffage (17) et/ou de points de mesure de la température (18).

16. Dispositif (1) selon l'une ou plusieurs des revendications 12 à 15, **caractérisé en ce que** le dispositif (1) est pourvu d'équipements de déplacement (16), de préférence de moteurs pas à pas (16).

17. Dispositif (1) selon l'une ou plusieurs des revendications 12 à 16, **caractérisé en ce que** le dispositif (1) présente plus de 20, de préférence plus de 40, plus préférablement, plus de 100, le plus préférablement, plus de 200 réacteurs (2).

18. Dispositif (1) selon l'une ou plusieurs des revendications 12 à 17, **caractérisé en ce qu'**au moins un réacteur (2) est équipé d'un cristal ATR, qui rend possible un contact spectroscopique au mélange réactionnel.

19. Dispositif (1) selon la revendication 15, **caractérisé en ce que** les réacteurs (2) sont disposés dans un plan parallèle à une surface du bloc métallique (4), **en ce que** les conduits d'apport ou les conduits d'évacuation (5, 10, 15) sont placés, au moins par sections, perpendiculairement à ce plan, **en ce que** l'on dispose sur une surface une entretoise (9, 12) qui présente des alésages (10), à travers lesquels les réacteurs (2) ou les conduits d'évacuation (10) peuvent être prolongés, **en ce que** le bloc métallique (4) et les entretoises (9) présentent, en tant que dérivations, des alésages de cuvette (11), qui sont reliées aux conduits d'évacuation (10, 15) et **en ce que** l'on dispose, sur l'entretoise, des fenêtres transparentes au rayonnement d'analyse (13), qui ferment les alésages de cuvette (11) vis-à-vis de l'environnement.

20. Dispositif selon l'une ou plusieurs des revendications 12 à 19, **caractérisé en ce que** les réacteurs (5) contiennent des catalyseurs (8), ayant de préférence un poids inférieur à 10 mg par réacteur (2), plus préférablement, ayant un poids inférieur à 1 mg par réacteur.
